# EUROPEAN PATENT SPECIFICATION

(11) **EP 3 005 222 B1**
(45) Date of publication and mention of the grant of the patent: **30.12.2020**
(21) Application number: 14732637.5
(22) Date of filing: 02.06.2014
(51) Int. Cl.: G06K 7/10

(54) **HEAD-MOUNTED CODE SCANNER**
KOPFMONTIERTER CODESCANNER
DISPOSITIF DE BALAYAGE DE CODE MONTÉ SUR LA TÊTE

(30) Priority: 03.06.2013 GB 201309869
(43) Date of publication of application: 13.04.2016
(73) Proprietor: Ocado Innovation Limited, Hatfield, Herts AL10 9UL (GB)
(72) Inventor: LINDBO, Lars Sverker Ture, Hatfield Hertfordshire AL10 9NE (GB); CLARKE, Paul, Hatfield Hertfordshire AL10 9NE (GB); ENGLE, Matthew D., Hatfield Hertfordshire AL10 9NE (GB)
(74) Representative: Ocado Group IP Department
(86) International application number: PCT/IB2014/061897
(87) International publication number: WO 2014/195853

(56) References cited:
- WO-A1-93/14472
- WO-A1-2012/127120
- WO-A1-2014/011790
- US-A- 5 744 788
- US-A1- 2003 179 350
- US-A1- 2006 238 550
- US-A1- 2009 001 173
- US-A1- 2012 175 421
- Uncategorized: "Barcode Scanning with Google Glass: A Future or Fantasy?", , 9 April 2013 (2013-04-09), XP055134534, Retrieved from the Internet: URL:http://www.scandit.com/2013/04/09/barc ode-scanning-with-google-glass-a-future-or -fantasy-ifihadglass/ [retrieved on 2014-08-13]

## Description

### TECHNICAL FIELD

The present disclosure relates generally to devices for scanning machine-interpretable codes such as barcodes and the like, and more particularly to mobile scanners used, for example, in order picking systems to scan items and/or bins in such systems.

### BACKGROUND

Barcode readers are well known and used in many different applications for optically reading identifiable symbols, such as UPC barcodes, QR codes, and other 1 or 2 dimensional barcodes. These barcodes provide a coded pattern of indicia, such as a number of bars of different widths and spacing in the case of a typical barcode, or a two-dimensional algorithm-developed pattern in the case of a QR code, which provide a unique visual identifier and can be read by an associated imaging or reading device, such as a scanner, camera, code reader, and the like.

Order picking systems are used in order fulfillment systems, such as those employed by online retailers to complete and dispatch orders of goods to consumers. Such goods may include, for example, consumer goods such as toys, books, etc, and consumable goods such as groceries. In automated or semi-automated order picking systems, especially those employed in large scale order fulfillment and delivery operations, such order picking systems utilize barcode scanners for tracking, inventory control, item identification, tote/bin tracking, etc. For example, labels containing identifying barcodes are commonly placed on bins/totes which are circulated through the order picking process and identified and tracked using barcode scanners/readers disposed at various points along the travel route, both within a warehouse during the order picking process and outside the warehouse during the order delivery process. As a result, barcode scanners/readers are required at various locations. These barcode scanners may include, for example, fixed barcode readers mounted proximate to a conveyor in order to be able to scan a bar code on a tote travelling along the conveyor or near the destination or order container.

Alternately, however, certain points in such complex order picking systems and processes require the manual scanning of totes, individual items, and/or other objects to be tracked in the order picking process. In such situations, therefore, a mobile barcode reader/scanner which is carried by the picker or other user of the system. Such barcode scanners carried by the picker typically take the form of a hand-operated scanner that the picker manually manipulates and which requires it to be pointed at the barcode to be able to read and identify each barcode label. Existing scanners carried by the picker in order picking operations typically come either as hand held devices, for example having a pistol grip type configuration, or as finger mounted devices connected to a wrist mounted battery and communications terminal.

Mobile barcode reasons which may be held or mounted to the wrist of a user and which employ a laser scanning system to read the barcodes on manipulated objects are therefore known. However, a disadvantage facing most existing systems is that the user must continuously actuate the reader every time a code is to be scanned. One known solution to this problem, as described in WO 93/11472, provides a hands-free laser scanner which is mounted to the user and which includes an infrared transmitter that is powered at all times, even when the laser engine is turned off, and a corresponding infrared receiver which together operate to detect the presence of an object within the range of the device. The infrared receiver, upon detecting the presence of an object within range based on reflected infrared energy from the object, operates control circuitry which in turn on the laser beam of the laser scanner.

However, all of these barcode scanning devices currently in use, and particularly the mobile or hand-operated scanners, have drawbacks. For example, certain devices require additional steps and/or time for the scanning operation and/or restrict the way the picker can handle the product. This is especially the case where the picker handles many different products and needs to rotate the item, in order to seek out and find the barcode on the packaging of the item and/or on the bin or tote, and when using systems which require two distinct systems such as an infrared transmitter/receiver used for detection of an objection and a laser engine used to actually read the detected barcode.

There therefore remains a need for an improved mobile code scanner for use in an order picking system which addresses at least one or more of drawbacks of existing barcode scanning devices.

### SUMMARY

Accordingly, there is provided a mobile device according to claim 1 and a method according to claim 12. Preferred embodiments are subject of the dependent claims.

The terms "machine-interpretable code", "machine-readable code", or simply "code", as used herein are understood to include codes comprising any optically readable image, text or other code having any type and/or combination of lines, fields, markings or other indicia, which may be used to identify an item to which the code is applied. For example, such a machine-readable code or code as used herein may include, but is not limited to, barcodes or other one-dimensional stripe codes (such as UPC codes applied to products and which are used to scan products at cash registers), two-dimensional codes such as QR codes, any other suitably-configured multi-dimensional codes (including, for example, any three-dimensional machine-readable indicia or devices), and any combination of such codes.

The terms "scanner" or "code reader" as used herein are understood to include any device able to identify, read and/or interpret any such codes. A scanner as used herein may for example include, but is not limited to, an optical code reader which uses at least one of laser and camera based scanning technologies.

In accordance with one aspect of the present invention, there is provided a mobile device for optically reading a machine-interpretable code on an item, the device comprising: a head-mountable scanner including a code reader having an optical input, the code reader being affixed to a headwear article adapted to be worn on a head of a user, the code reader being disposed on the headwear article at a forward-facing position thereon to point the optical input in a direction of the user's field of vision, a scannable field of the optical input of the code reader falling within the user's field of vision when wearing the headwear article; a processing unit in electrical communication with the head-mountable scanner and including at least a power source and an electronic control unit, the electronic control unit controlling the head-mounted scanner to at least switch the code reader between a detection mode and a reading mode thereof; a wireless communication device in electrical communication with the electronic processing unit, the wireless communication device being operable to wirelessly transmit information corresponding to the scanned machine-interpretable code to a remote receiving unit for storage and/or data processing; wherein, in the detection mode, the code reader being operable in a low power mode sufficient to detect the presence of at least one of the machine-interpretable code and an object representative of the presence of the machine-interpretable code within the scannable field; and upon detection of the presence of the machine-interpretable code within the scannable field, the electronic control unit switching the code reader into a higher-powered reading mode sufficient for the code reader to optically read the machine-interpretable code; characterised in that the code reader comprises a range finder device, the range finder device including at least a wave source and at least a sensor operable to detect feedback from the wave source, the wave source emitting a low power range-finding wave in the detection mode.

In one possible embodiment, the device described above includes a code reader which comprises a light emitting device, the code reader including a light source and at least a light sensor, the code reader emitting a low power light in the detection mode and emitting a higher power light in the reading mode.

In another possible embodiment, the mobile code reader of any of the devices described above described above may include a camera, wherein when the code reader operates in the higher-powered reading mode the camera is operable to capture one or more images of the detected machine-interpretable code and the processing unit is operable to read the machine-interpretable code based on said captured camera images.

In another possible embodiment, the mobile code reader of any of the devices described above may include a range finder device, the range finder device including at least a pointing light source and at least a light sensor operable to detect feedback from the pointing light source, the pointing light source emitting a low power laser light in the detection mode.

In another possible embodiment, the head-mountable scanner of the mobile code reader described above includes an illuminating light which is operable to emit a high power illuminating light in the reading mode.

Any of the devices described above may be incorporated into, or attached to the head-worn article adapted to be worn on the head of the user, and this head-worn article may include, in one possible embodiment, at least one of a band, a hat, a helmet and eyewear.

The processing unit of any of the devices described above may also be operable to measure at least a distance between the optical input of the code reader and the machine-interpretable code detected using the detected feedback from the light source during the detection mode, and the processing unit being operable to optimize optical properties of the images captured by the camera during the reading made based on said measured distance.

In another possible embodiment, the control system of the mobile code readers of any of the devices described above may be operable to switch the code reader between the detection mode and the reading mode autonomously, without requiring actuation input from the user. The control unit may also be configured to switch the code reader from the detection mode to the reading mode when at least two concurrent conditions are fulfilled: i) the presence of the machine-interpretable code is detected within the scannable field; and ii) an orientation of the code reader is disposed within a preselected acceptable range.

The code reader of any of the devices described above may be oriented in a tilted orientation relative to horizontal within said preselected acceptable range of said orientation of the code reader which corresponds to a downward-looking position of the head of the user when wearing the headwear article having said code reader thereon.

Any of the devices described above may further comprise a microelectromechanical sensor in communication with the processing unit and operable to detect at least said orientation of the code reader.

Any of the devices described above may also further comprise a manually actuated switch disposed within reach of the user and in communication with at least the processing unit, the manually actuated switch being operable to at least one of turn on the device and activate the detection mode, switch the code reader between the detection mode and the reading mode, and turn off the device.

Any of the devices described above may also comprise a wireless communication device in electrical communication with the electronic processing unit, the wireless communication device being operable to wirelessly transmit information corresponding to the scanned machine-interpretable code to a remote receiving unit for storage and/or data processing.

There is also provided, in accordance with another aspect of the present invention, a method of scanning machine-interpretable codes on an item using a wireless mobile device, the method comprising: operating, in a low power detection mode, a scanner mounted on a headwear article, and using the scanner to detect the presence of one or more of the machine-interpretable codes and an object representative of the presence of the machine-interpretable code within the scannable field; in response to the detection of the presence of one or more of said objects within the scannable field, switching the scanner to a higher power reading mode, and reading one or more machine-interpretable codes using the scanner operating in the higher power mode; and wirelessly transmitting information relating to the machine-interpretable codes read by the scanner to a processing unit in a remote location for storage and/or data processing; characterised in that the scanner comprises a range finder device, the step of operating the scanner in the low power mode further comprising using a wave source of the range finder device to emit a low power range-finding wave to target said one or more objects.

The method described above may further include a step of identifying to the user that said bar codes have been read by the scanner, and this may include using both visual and audible warning signals. The method as described above may also further comprises wirelessly transmitting the information to a remote location for storage and/or data processing, and/or storing information unique to the scanned bar code.

The method described above may further include scanning barcodes in an order picking system for consumer and/or consumable goods.

### BRIEF DESCRIPTION OF THE DRAWINGS

Reference is now made to the accompanying drawings, showing by way of illustration a preferred embodiment thereof, and in which:
Fig. 1 is a schematic of a mobile device for optically reading machine-interpretable codes;
Fig. 2 is a block diagram of a method of using a device of Fig. 1;
Fig. 3 is a perspective view of a head-mounted scanner of a mobile code reader in accordance with one embodiment of the present disclosure;
Fig. 4 is a side view of a user wearing the mobile code reader and head-mounted scanner of Fig. 3;
Fig. 5 is a side view of a user wearing a head-mounted scanner in accordance with an alternate embodiment, showing the user's field of vision and the corresponding scannable field of the head-mounted scanner;
Figs. 6 and 7 are front views of head-mounted scanners in accordance with alternate embodiments of the present disclosure; and
Fig. 8 is a schematic side view of a vehicle operated by a user wearing an alternate embodiment of the head-mounted scanner.

### DETAILED DESCRIPTION

The mobile code reader or device for optically reading machine-interpretable codes of the present disclosure will be described below with particular reference to their use in an order picking system, such as one used as part of the fulfillment and delivery of orders for consumer and/or consumable goods. Such order picking systems may include automated or semi-automated order picking systems, for example those employed in large scale order fulfillment and delivery operations, such as those used by online grocery stores for example. However, it is to be understood that the present mobile barcode reader and its method of use may be used in other applications whereby it may be useful and/or necessary to scan articles, such as item tracking, inventory control, item identification, container, letter, parcel or bin tracking, etc.

Mobile code readers in accordance with the present disclosure may be used with particular advantage by a user who may need to manually manipulate (i.e. with their hands) the item to be scanned or whom may require "hands-free" scanning of an object. For example, a driver of a fork-lift or other vehicle may need to keep both on the wheel or otherwise in contact with the controls of the vehicle while still being able to scan an identified object.

With known scanning devices, even mobile ones, this is not readily feasible as the user or operator typically needs to hold on to a grip-type mobile barcode reader or point a wrist or finger mounted scanner at the barcode on the item being handled. In either case, only one remaining hand of the user is available for physically holding the article or articles. The presently described mobile code reader enables both hands of the user of the device to be completely liberated for manipulation of the item being scanned or for performing other tasks, such as operating a vehicle or other machinery, thereby providing advantages over known mobile devices including, but not limited to, increasing the efficiency and ease of use of the device, and therefore the speed and/or cost effectiveness of the operation.

The head-mounted scanner 12 of the present device thus enables a machine-interpretable code to be instantly scanned, as the item having the barcode thereon is within the field of vision of the device, thereby permitting the user to manipulate the article, if necessary using two hands, in order to find the barcode. Similarly, the head-mounted scanner 12 also enables "hands-free" scanning of barcodes by the user, without requiring the user to use his or her hands for this purpose. This therefore enables the user to have his or her hands free to perform other tasks, such as operating a vehicle or other machinery, for example. By having the scanning location in the most convenient place, namely in front of the user (or the picker, in the case of use of the present device in an order picking system), the act of identifying the location of the barcode and the scanning of the barcode are merged into one single activity, neither of which require the user's hands. The present mobile code reader may also enable improved health and safety conditions, as it does not require the user to awkwardly manipulate and scan an item while it is being moved, turned or otherwise manipulated, or to remove the user's hands from other equipment or machine operating controls (e.g. a vehicle steering wheel, etc.).

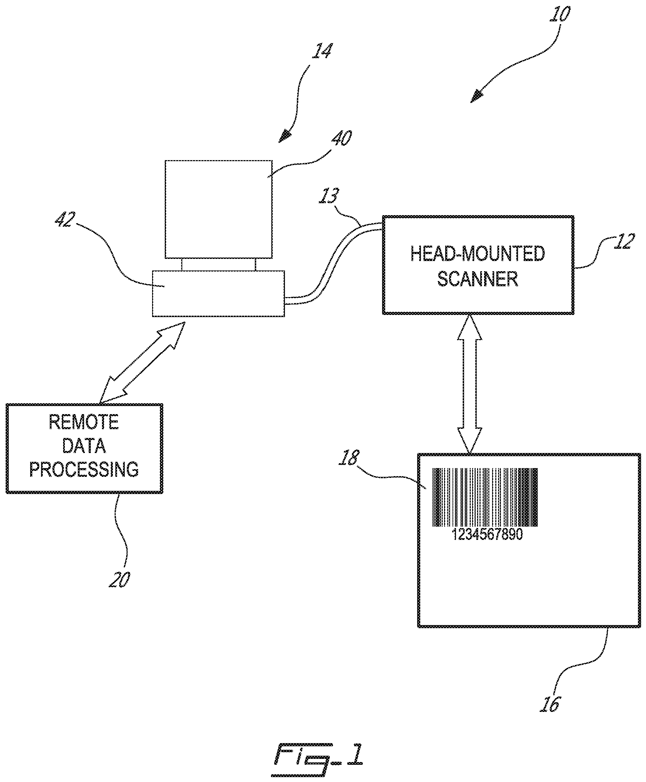

Fig. 1 depicts a schematic of the present mobile code-reading device 10 or simply "code reader", in accordance with one embodiment of the present disclosure. The code-reading device 10 is operable to optically read machine-interpretable codes 18, such as barcodes, and therefore is used for scanning a machine-interpretable code 18 disposed on an item 16 which is to be identified, tracked, or alternately in order to determine or convey a given data set of information. As noted above, this machine-interpretable code 18 may include a barcode, as shown In Fig. 1, or any other type of machine-readable/interpretable code, and may include codes comprising any optically readable image, text or other indicia having any type and/or combination of lines, fields, markings, etc, and which may be used to identify an item to which the code is applied. These can include barcodes or other one-dimensional stripe codes, QR codes or other two-dimensional codes, or any other suitably-configured multi-dimensional code that is optically readable and interpretable by a scanner. While the term "barcode" will be used below with reference to the code 18 on the item 16, it is to be understood that this is but an exemplary embodiment for the purposes of the present description.

In the embodiment described above, wherein the present mobile code reader 10 is used as part of an order picking system for an order fulfilment and delivery processes, the item 16 identified by the barcode 18 may be a bin or tote into which purchased products are placed, a pallet or other larger storage container on or within which is disposed a number of smaller items or bins, or alternately may be the purchased products themselves. The barcode 18 may be on a label which is affixed to the item 16, or may be printed or otherwise applied directly to the item 16.

The mobile barcode reader 10 includes generally a head-mounted scanner 12 in electrical communication with an electronic processing unit 14. This may be done using cable(s) 13 as shown in Fig. 1, or alternately the head-mounted scanner 12 and the electronic processing unit 14 may be either directly incorporated into a common assembly (i.e. they may be integrated together) or may be separate as shown but disposed in wireless communication rather than being tethered directly using the cable(s) 13. The wireless connection between the head-mounted scanner 12 and the electronic processing unit 14 may be achieved using short range radio communication technology, such as BluetoothTM.

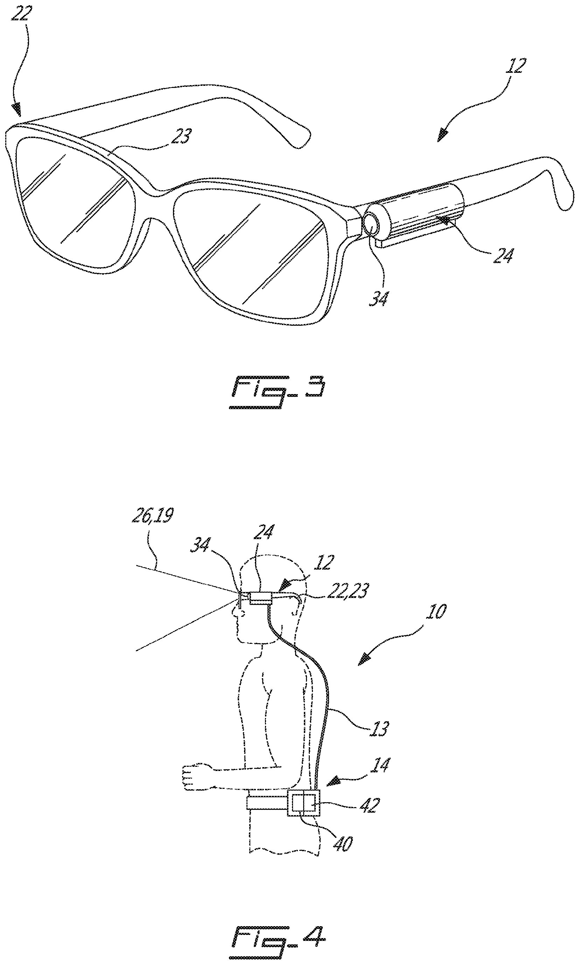

In the embodiment depicted in Fig. 4, for example, only the relatively lightweight head-mounted scanner 12 portion of the barcode reader 10 is actually mounted to the head of the user, and the remaining components, such as the processing unit 14, including for example a power source such as a battery, control unit and/or radio communication components, are disposed together in a separate unit that may be attached to another part of the user's body (such as worn on a belt as shown, for example).

In all cases, however, the barcode reader assembly 10 is preferably mobile, in that it can be easily worn by the user of the device, and more particularly wherein at least the head-mounted scanner portion 12 thereof is adapted to be worn on the head of user. In one possible embodiment, the barcode reader assembly 10 is wireless, in that it is disposed in wireless communication, if and when necessary, with a remote data processing unit 20.

Referring to the embodiment seen in Figs. 3-4, the head-mounted scanner 12 of the barcode reader 10 includes at least a code reader 24 having an optical input/output 34 and which is mounted to a headwear article 22.

The code reader 24 of the head-mounted scanner 12 may be of a number of different types. In one embodiment, the code reader 24 includes a light emitting device which has light source and the optical input/output 34 may include a lens from which the light source is projected and a light sensor into which light signals are received.

In an alternate embodiment, however, the code reader 24 includes a camera (either in addition to a light source or instead), in which case the optical input/output 34 may include a camera lens. Although a camera which does not require additional illumination or light source is possible, in a particular embodiment wherein the code reader 24 includes a camera for reading the barcodes, an additional illumination element may be provided in order to better illuminate at least a portion of the scannable field of the camera, thereby improving the resolution of the image taken by the camera. By using the illumination element to provide more light when the camera is in operation (ex: during in the scanning or reading mode), a smaller camera aperture and a shorter exposure time can be used and better visual resolution of the camera image taken is thus enabled. Further, a range finder may be used in conjunction with the camera of the code reader 24, in which case the user uses a wave source of the range finder (which may include, for example, a laser, infrared, ultrasound, radar, and the like) to produce a corresponding wave (light, sound, radio, etc.) to target a barcode to be scanned, and the feedback from the wave source received by a sensor o the code reader 24 is used to adjust the focal length of the camera, or alternately used to broaden or narrow the scanned vision field of the camera making up the code reader. In one particular embodiment, the range finder is optical and produces a "pointing light", which may employ a laser for example, In this embodiment, therefore, the code reader 24 may include a laser pointing light which is activated by the user to act as a target acquiring light, used by the operator of the device 10 so as to know when the camera of the code reader 24 is pointed at a desired target, e.g. a barcode to be scanned. The feedback from the laser pointing light is received by an optical sensor of the code reader 24 and used, once a barcode target is acquired, to switch the device from a lower-powered mode to a high-power scanning mode of the device and/or to better focus the image taken by the camera of the optical barcode scanning portion of the code reader. In the lower-power detection mode, therefore, the pointing light or other optical range finder is therefore in operation and employed to target and measure the distance to the barcode to be scanned, thereby optimising the focal length of the camera lens (or the digital equivalent thereof) for taking a digital image of the barcode. This digital image of the "scanned" barcode is then read using the processing unit 14 running a suitable image processing and/or image recognition software capable of recognizing and reading barcodes in digital images captured by the camera. In this embodiment, therefore, no laser scanning of the barcode code, for the purposes of reading the barcode, is performed when the device is operating in the high-powered mode. While a low-powered laser may be used in this embodiment as the range finder, or optical pointing light, used in the low-power detection mode, the camera of the code reader 24 acts as the only "reader" or "scanner" in operation during the high-power mode used for actually reading the barcodes.

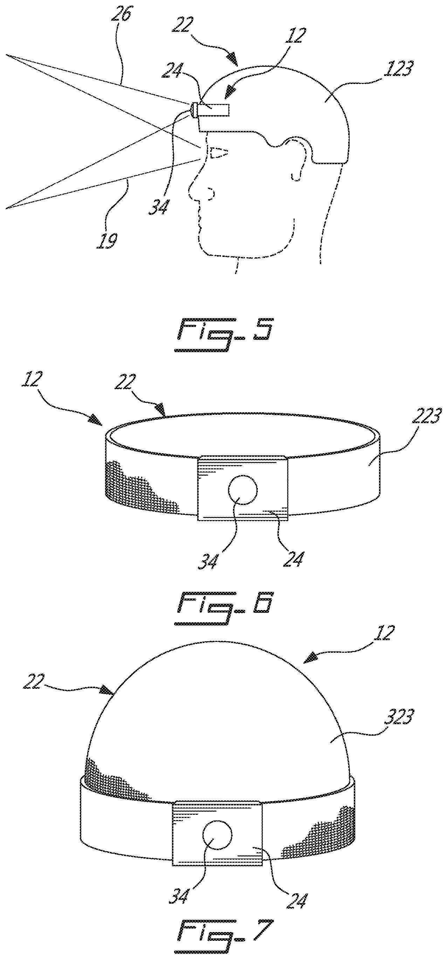

In the depicted embodiment of Figs. 3-4, the headwear article 22 is eyewear, and more particularly still a pair of glasses 23 to which the code reader 24 of the head-mounted scanner 12 is fastened. The term "headwear article" as used herein is understood to include any removable article capable of being worn on the head, face or eyes of a user, such as but not limited to: eyewear such as glasses 23 (as shown in Fig. 3) or goggles, a helmet or other protective headgear 123 (as shown in Fig. 5), a headband (as shown in Fig. 6), a hat (as shown in Fig. 7), and the like.

The code reader 24 may be detachably mounted to the headwear article 22 using a mounting unit or other detachable or permanent fastening mechanism, such as to secure the code reader 24 in place on the headwear article 22. In all cases, however, the code reader 24 may be mounted on the headwear article 22 in a forward-facing position and orientation, proximate to the front of the headwear article and at least such that an optical input 34 of the code reader 24 points/faces in a direction within the field of vision of the user when wearing the headwear article 22. As best seen in Fig. 5, the scannable field 26 of the code reader 24 (or more precisely, of the optical input 34 thereof) falls within the field of vision 19 of the user wearing the headwear article 22 having the head-mounted scanner 12 thereon.

Accordingly, the scannable field 26 will always fall within and follow the direction and orientation of the user's field of vision, such that the code reader 24 will always point in the direction that the user is looking. As the user moves his or her head, the code reader 24 will necessarily follow. As such, the user's hands are left free to manipulate the item 16 and to perform other tasks (such as operate a vehicle or other machinery, control a computer, etc.), and as the user looks at the item to be scanned the item will remain in the scannable field 26 of the code reader 24 during the work operation, such as manipulation of the item. This maximizes the efficacy and accuracy of the scanning of the barcode 18 on the item 16 during any manual movement, transport and/or manipulation of the item by the user wearing the head-mounted scanner 12.

Referring now back to Figs. 1 and 4, the processing unit 14 includes a power source 40 and an electronic control unit 42 which controls the operation of the entire mobile barcode reader 10. The electronic control unit 42 is programmed and/or otherwise configured to control the head-mountable scanner 12, either wirelessly or via hard-wired communication, such as to switch the code reader 24 of the head-mounted scanner 12 between at least two operational modes thereof. More particularly, the electronic control unit 42 is operable to switch the code reader 24 of the device between a lower-powered detection (or "range finding") mode and a higher-powered reading (or active "scanning") mode. In the lower-powered detection or "range finding" mode, the code reader operates in a low power consumption condition in which it is still operable to detect at least the presence of a predetermined target object within the scannable field 26. The target object may be any number of different objects, including but not limited to, identifiers located on the item to be scanned itself. Upon detection of the presence of the one or more of these target objects within the defined space by the code reader operating in the detection mode, the electronic control unit then switches the code reader into the higher-powered reading mode. In the reading mode, the code reader operates at a higher power, sufficient to optically read one or more machine-interpretable codes in the defined scanned space. Optionally, but not necessarily, in the detection or "range finding" mode, the system may also detect a given range or distance between the identified readable code and the optical input/output 34 of the code reader 24 of the head mounted scanner 12.

In the detection mode, the code reader 24 of the head-mounted scanner 12 operates in a low power consumption condition, but which remains sufficient to scan (either continuously, at predetermined intervals, or when actuated by the user) a region 41 within the scannable field for the presence of any objects therein.

This "range finding" mode, enables the code reader 24 of the head-mounted scanner 12 to save energy by operating in a lower power consuming state, while still scanning the region 41 of the scannable field (within the user's field of vision 19) in order to detect whether there are any objects present therein.

Upon detection by the code reader 24 of one of the predetermined objects, indicators or machine-readable codes within the scannable field 26, this information is sent back to the electronic control unit 42 of the processing unit 14. The electronic control unit 42 then switches the code reader 24 of the head-mounted scanner 12 from the lower-powered detection mode, into a higher-powered "reading" or "scanning" mode. In this scanning mode, the code reader 24 is operable to actually optically read the barcode 18 and then identify and/or transmit the information represented by the scanned barcode back to the processing unit 14. In one possible, but not necessarily essential embodiment, this switching by the electronic control unit 42 of the code reader 24 between the range finding mode and the reading mode is performed autonomously, without requiring input from the user.

In the embodiment described further above wherein the code reader 24 includes a camera and an additional "flash" or illumination device for lighting the scannable field of the camera in order to improve the resolution of the image taken by the camera, this additional illumination device may be activated (i.e. turned on) when the code reader is switched into the reading mode. The term "flash" or "camera flash" as used herein is intended to encompass both a periodic light (in the sense of a traditional cameral flash) as well as a continuous light which is similarly used to illuminate the immediate environment of the camera for the purposes of improve the quality of the image captured by the camera. Accordingly, when the illumination is active, more power is consumed, but while operating in the range finding mode, the illumination is deactivated and thus power usage is less. Alternately, the camera does not require an additional light source or illumination device, in which case the code reader 24 may not emit light but the camera which makes up the code reader still operates in a lower power consumption mode in the range finding mode and a higher power consumption mode in the reading mode. In the lower-power detection mode, however, a laser or other range- finder waves (either light based, such as laser or infrared, sound based, such as ultrasound, or radio based, such as radar) may be employed to measure the distance to the barcode to be scanned, thereby optimising the focal length of the camera lens (or the digital equivalent thereof) for taking an image of the barcode which is subsequently read using the processing unit 14 running suitable image processing and/or image recognition software capable of recognizing and reading barcodes in the captured images.

The range-finder may also be a stereoscopic type device, which employs two or more cameras having known distances therebetween, the images from these cameras thereby being able to be used by the processing unit to calculate a distance to the object captured in the images obtained simultaneously from these two stereoscopic range-finding cameras.

Accordingly, when operating in the detection mode, the code reader 24 operates effectively as a low energy range finding device, which is capable of detecting when/if an item is located in the space in front of the operator, i.e. in the scannable space 41 of the code reader 24 and within the vision field 19 of the user. In another alternate embodiment, a separate low power range finding device may be provided, i.e. distinct from the optically scanning code reader 24. In either case, however, only once the presence of a recognisable barcode 18 is detected within the scannable space does the electronic control unit 42 switch the head-mounted scanner 12 into its higher powered reading mode such that the barcode 18 is actively read (ex: by illuminating, scanning, digital image capture, or otherwise). As such, the power consumption of the code reader 24 and thus of the head-mounted scanner 12 is significantly reduced relative to a device which always operates in an active scanning/reading mode, for example. Using the present device, the higher power full-scanning operation of the device is limited only to when this is actually required. This results in numerous advantages such as reduced cost and weight for batteries and other power sources, extended battery life, longer user times, etc.

In the aforementioned embodiment wherein the code reader 24 includes a light source, this may include a laser, for example, which is emitted from a lens of the code reader 24. In this embodiment, therefore, the code reader emits only a low power laser light when operating in the detection mode, and emits a higher powered laser light when operating in the reading mode. In an alternate embodiment, however, a low power "pointer light" may also be provided, at least when operating in the detection mode, in order to help guide the user of the device as to where the code reader 24 is scanning and where within the scannable field the item or code to be scanned is to be located. This low power "pointer light" may either be a separate light (such as a lower powered laser pointer) or integrated into the light emitting portion of the code reader 24, whether this is of the camera or the laser coder reader type.

The code reader 10 may also include an input-output and/or display device (such as a small screen display, sound producing device, etc.), which is in communication with the processing unit 14. This display device may, in one possible embodiment, provide one or more indicators to notify the user that a valid barcode 18 has been identified and read by the code reader 24 of the head-mounted scanner 12. Such indicators may be audible and/or visual. For example, an audible note may sound when the head-mounted scanner 12 identifies and scans a barcode 18 within the vision field 19 of the user. Such indicators, audible and otherwise, can also be used to indicate different types of errors, in addition to identifying a valid scan of a barcode. For example, when an unexpected or incorrect product is scanned, a warning signal may be programmed to sound and/or be displayed. Such audible and/or visual prompts may also be used, in an alternate embodiment, to prompt the operator to use a screen for further interaction, or to take another pre-determined action. In a variant of this embodiment, the display device may also be operable to provide spoken or text messages provided to the operator.

In yet another embodiment, the code reader 24 of the head-mounted scanner 12 can be used to select from a number of pre-defined messages. In this embodiment the scanner 12 may include a pointer device so that the operator can point it to a specific location which would contain a barcode representing the message the operator wishes to send. Versions of this embodiment would include barcodes on the gloves or sleeves of the uniform, and barcodes fixed within the work area. Messages conveyed this way could include "log on (this station)", "log off", "confirmed", "need assistance", etc.

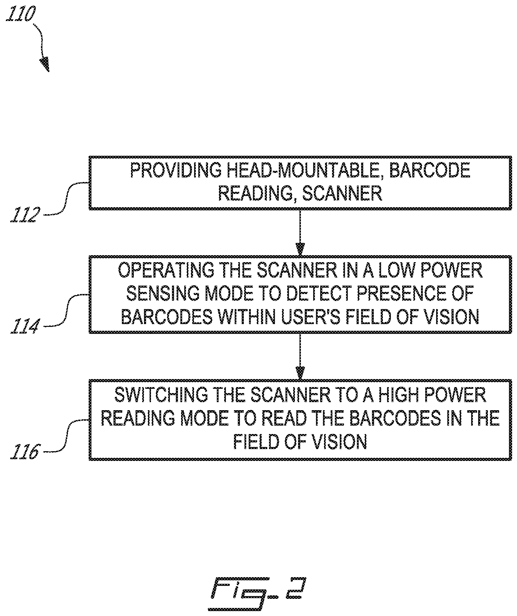

Referring now back to Fig. 2, in use the aforementioned barcode reader 10 is operated generally as follows as part of a method 110 for scanning barcodes on items (such as but not limited to items used in an order picking system for consumer and/or consumable goods). The method 110 includes generally the steps of: providing the head-mounted barcode reading scanner 112; operating the scanner in a low power detection mode to detect the presence of barcodes within the defined space in front of the user 114; and switching the scanner to a high power reading mode to read the barcode(s) 116.

At 112, providing a head-mountable, machine-readable code scanner may more particularly include, providing a head-mounted scanner 12 mounted on a headwear article 22 adapted to be worn on the head of user such that a scannable space 41 of the scanner 12 falls within user's field of vision 19.

At 114, operating the scanner may more particularly include, operating the head-mounted scanner 12 in a low power mode, the head-mounted scanner being operable only to detect the presence of one or more items within the scannable space 41 of said field of vision 19 in the low power mode. This may further include, in at least one embodiment, emitting a lower power scanning light form the head-mounted scanner 12 in the detection mode and emitting a higher power scanning light from the head-mounted scanner 12 in the high power mode.

At 116, switching the scanner to a higher-power reading mode may more particularly include, in response to the detection of the presence of one or more items within the scannable space 41, switching the head-mounted scanner 12 into the high power mode, and then reading the bar codes 18 within the scannable space 41 using the head-mounted scanner 12 operating in the high power mode.

Additional steps of the method 110 may also include, for example, any one or more of the following additional steps; identifying to the user that the barcode(s) has(have) been read by the head-mounted scanner, such as by using an audible and/or visual indicator; wirelessly transmitting information read from the scanned barcode to a remote location for storage and/or data processing; and/or locally storing the information relating to the scanned barcode in the barcode reader 10 itself, such as in the processing unit 14 thereof.

In an alternate embodiment, the head mounted scanner 12 may also be provided with a separate sensor which is operable to determine at least the orientation of the head-mounted scanner 12, and thus the orientation and/or relative position of the user's head when wearing the headwear article have the head-mounted scanner thereon. This additional orientation sensor may comprise, for example, a microelectromechanical sensor (MEMS) having one or more of a gyroscope, accelerometer, a digital compass and an inertial module. This sensor is operable to detect, for example, when the user is looking down and when the user is looking straight ahead. Accordingly, this additional orientation sensor can be used to turn the code scanner 24 on and off, or from low to high power operation modes thereof. For example, the control system may be configured to activate the high-powered reading/scanning mode of the code scanner 24 upon detection by the sensor that the user looks down, as this is the expected head position when the user picks up or manipulates an article to be scanned, or looks in another predetermined direction directed to an object to be scanned. However, when the user looks up towards the horizon, this additional sensor may be used to turn the code reader 24 off, (i.e. switch it to an "off mode). This may be useful, for example, both to further save power consumption as well as prevent any undesirable issues of laser light or camera flash illuminations blinding co-workers nearby. Alternately, the control system may be configured such that there needs to be two concurrent conditions fulfilled before the high-powered scanning mode of the code scanner 24 is activated, namely an object is detecting within range of the device using the pointing light or optical range finder AND the orientation sensor detects that the user's head is positioned in a predetermined position (e.g. tilted downwards).

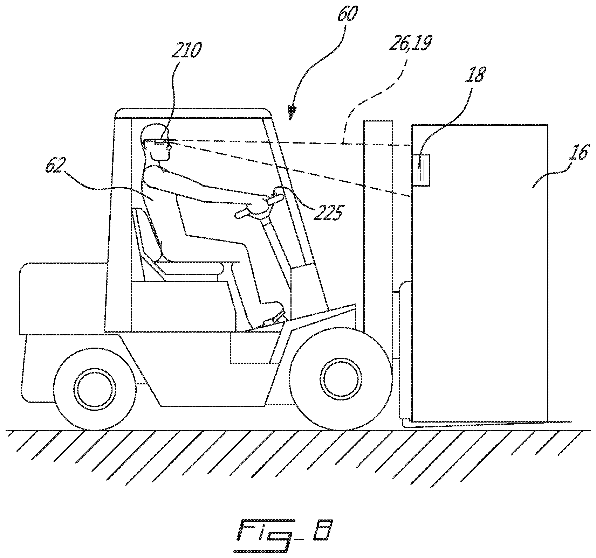

Referring now to Fig. 8, as described briefly above, in accordance with one particular embodiment a mobile code-reading device 210 may be advantageously used by an operator of a vehicle 60, such as a forklift truck for example, for the purposes of scanning barcodes 18 disposed on pallets or containers 16 that are manipulated by the vehicle and/or which the user of the vehicle wishes to identify and scan. The mobile code-reading device 210 as used in this particular embodiment is substantially the same as the device 10 described above, and similarly includes a head-mounted scanner 12 which is worn by the user (or driver) 62 of the vehicle 60 on his or her head, and enables the machine-interpretable code 18 to be read when a barcode 18 on a container 16 is located within the scannable field 26 of the code reader of the head-mounted scanner 12, which corresponds generally to, or at least lies within, the field of vision 19 of the driver 62. This accordingly permits the driver 62 of the vehicle 60 to maintain both of his/her hands on the steering wheel or other controls of the vehicle, while still being able to scan barcodes 18 disposed on objects being manipulated by the vehicle. The head-mounted scanner 12 of the code-reading device 210 therefore enables "hands-free" scanning of barcodes by the driver 62 of the vehicle 60. Because the head-mounted scanner 12 necessarily points in the direction of the vision of the driver, the ease with which barcodes on containers being manipulated by the vehicle, which may be particularly useful and relevant in the case of fork-lift trucks and their operators in warehouse or storage facilities, can be scanned/read by the device 210 is particularly advantageous. This embodiment also permits improved health and safety conditions, as it does not require a vehicle driver to cease operating the vehicle, or remove one or both hands from the vehicle controls in order to perform a scanning operation.

The device 210, which is particularly adapted to be worn by operators of machinery or vehicles 60, may also further include a manually actuated switch 225 disposed, for example, on the steering wheel or other controls of the vehicle. This manually actuated switch 225 is used by the operator 62 to activate the code-reading device 210 worn on his or her head, in order to trigger (i.e. "turn on") the low-power "range finding" mode of the device 210 as described above. This may also in turn activate the range finding pointing light, which may be a low powered laser for example, that is used to detect the presence of a barcode 18 and to permit more accurate data capture when the device 210 is automatically (i.e. without manual actuation) switched over into the higher-power scanning mode (e.g. image capture using a camera of the device 210). The actuation signal may be optimally transmitted from the switch 225 to the head-mounted scanner 12 of the device 210 wirelessly, via BluetoothTM or otherwise. However, a wired connection therebetween may also be possible, whereby the head-mounted scanner portion 12 of the device 210 is connected or tethered to the vehicle 60, or at least to the switch 225 mounted thereon. The switch 225 may also be used by the operator to turn off the device 210.

The above description is meant to be exemplary only, and one skilled in the art will recognize that changes may be made to the embodiments described without departing from the scope of the invention as defined by the claims. Except to the extent necessary or inherent in the processes themselves, no particular order to steps or stages of methods or processes described in this disclosure, including the Figures, is intended or implied. In many cases the order of process steps may be varied without changing the purpose, effect, or import of the methods described.

## Claims

1. A mobile device (10) for optically reading a machine-interpretable code (18) on an item, the device (10) comprising:
a head-mountable scanner (12) including a code reader (24) having an optical input (34), the code reader (24) being affixed to a headwear article (22) adapted to be worn on a head of a user, the code reader (24) being disposed on the headwear article (22) at a forward-facing position thereon to point the optical input (34) in a direction of the user's field of vision, a scannable field (26) of the optical input (34) of the code reader (24) falling within the user's field of vision when wearing the headwear article (22);
a processing unit (14) in electrical communication with the head-mountable scanner (12) and including at least a power source (40) and an electronic control unit (42), the electronic control unit (42) controlling the head-mounted scanner (12) to at least switch the code reader (24) between a detection mode and a reading mode thereof;
a wireless communication device in electrical communication with the electronic processing unit (14), the wireless communication device being operable to wirelessly transmit information corresponding to the scanned machine-interpretable code (18) to a remote receiving unit (20) for storage and/or data processing;
wherein, in the detection mode, the code reader (24) being operable in a low power mode sufficient to detect the presence of at least one of the machine-interpretable code (18) and an object (16) representative of the presence of the machine-interpretable code (18) within the scannable (26) field; and
upon detection of the presence of the machine-interpretable code (18) within the scannable field (26), the electronic control unit (42) switching the code reader into a higher-powered reading mode sufficient for the code reader (24) to optically read the machine-interpretable code (18); **characterised in that** the code reader (24) comprises a range finder device, the range finder device including at least a wave source and at least a sensor, the sensor forming part of the optical input (34) of the code reader (24) and being operable to detect feedback from the wave source, the wave source emitting a low power range-finding wave in the detection mode and a higher-power reading wave in the reading mode, based on the controlling of the head-mounted scanner (12) by the electronic control unit (42).

2. The mobile device of claim 1, wherein the code reader (24) comprises a camera, wherein when the code reader (24) operates in the higher-powered reading mode the camera is operable to capture one or more images of the detected machine-interpretable code and the processing unit is operable to read the machine-interpretable code based on said captured camera images.

3. The mobile device of claim 1 or 2, wherein the head-mountable scanner (12) includes an illuminating light which is operable to emit a high power illuminating light in the reading mode.

4. The mobile device of claim 2, wherein the processing unit (14) is operable to measure at least a distance between the optical input (34) of the code reader (24) and the machine-interpretable code (18) detected using the detected feedback from the wave source during the detection mode, and the processing unit 14 being operable to optimize optical properties of the images captured by the camera during the reading made based on said measured distance.

5. The mobile device of claim 2, wherein the wave source of the range finder device comprises one of a laser, infrared, ultrasound and radar.

6. The mobile device of any one of claims 1 to 5, wherein the control unit (42) is operable to switch the code reader (24) between the detection mode and the reading mode autonomously, without requiring actuation input from the user.

7. The mobile device of claim 6, wherein the control unit (42) is configured to switch the code reader (24) from the detection mode to the reading mode when at least two concurrent conditions are fulfilled: i) the presence of the machine-interpretable code (18) is detected within the scannable field (26); and ii) an orientation of the code reader (24) is disposed within a preselected acceptable range.

8. The mobile device of claim 7, wherein the code reader (24) is oriented in a tilted orientation relative to horizontal within said preselected acceptable range of said orientation of the code reader (24) which corresponds to a downward-looking position of the head of the user when wearing the headwear article having said code reader thereon.

9. The mobile device of claim 7 or 8, further comprising a microelectromechanical sensor in communication with the processing unit and operable to detect at least said orientation of the code reader (24).

10. The mobile device of any one of claims 1 to 5, wherein the control unit (42) further comprises a manually actuated switch disposed within reach of the user and in communication with at least the processing unit (14), the manually actuated switch being operable to at least one of turn on the device and activate the detection mode, switch the code reader (24) between the detection mode and the reading mode, and turn off the device.

11. The mobile device of any one of claims 1 to 10, wherein the object (16) representative of the presence of the machine-interpretable code (18) includes one or more target indicators disposed on the item.

12. A method of scanning machine-interpretable codes (18) on an item (16) using a wireless mobile device, the method comprising:
operating, in a low power detection mode, a scanner (24) mounted on a headwear article (12), and using the scanner (24) to detect the presence of one or more of the machine-interpretable codes (18) and an object (16) representative of the presence of the machine-interpretable code (18) within the scannable field (26);
in response to the detection of the presence of one or more of said objects (16) within the scannable field (26), switching the scanner (24) to a higher power reading mode, and reading one or more machine-interpretable codes (18) using the scanner (24) operating in the higher power mode; and
wirelessly transmitting information relating to the machine-interpretable codes (18) read by the scanner to a processing unit in a remote location for storage and/or data processing **characterised in that**
the scanner (24) comprises a range finder device, the step of operating the scanner (24) in the low power mode further comprising using a wave source of the range finder device to emit a low power range-finding wave to target said one or more objects 16 and the step of reading one or more machine-interpretable codes (18) using the scanner (24) operating in the higher power mode comprising using the wave source of the range finder device to emit a higher-power reading wave.

13. The method as defined in claim 12, further comprising identifying to the user that said machine-interpretable codes (18) have been read by the scanner (24).

14. The method of claim 12, further comprising storing information unique to the read machine-interpretable codes (18).

15. The method of claim 12, further comprising scanning the machine-interpretable codes (18) in an order picking system for consumer and/or consumable goods.

16. The method of any one of claims 12 to 15, wherein the scanner (24) comprises a camera, the step of operating the scanner (24) in the high power mode further comprising: using the camera to capture one or more images of the detected machine-interpretable code (18), wherein the processing unit (14) is operable to read the machine-interpretable codes based on the captured camera images.

17. The method of claim 16, further comprising measuring a least a distance between the scanner (24) and the machine-interpretable codes (18) using detected feedback from the low power range-finding wave active during the low power detection mode.

18. The method of claim 17, further comprising optimizing optical properties of the machine-interpretable codes (18) read using the scanner (24) based on the distance measured by the low power range-finding wave.

19. The method of claim 15, further comprising emitting a high power illuminating light in the reading mode to improve the quality of the images captured by the camera.

20. The method of any one of claims 1 to 19, further comprising switching scanner (24) between the detection mode and the reading mode autonomously, without requiring actuation input from a user of the device.

21. The method of claim 20, further comprising switching the scanner (24) from the detection mode to the reading mode only when at least two concurrent conditions are fulfilled: i) the presence of the machine-interpretable code (18) is detected within the scannable field; and ii) an orientation of the scanner (24) is disposed within a preselected acceptable range.

22. The method of claim 21, further comprising using a microelectromechanical sensor to measure the orientation of the scanner (24).

23. The method of claim 21, further comprising detecting when the scanner (24) is oriented within the preselected range by determining that the scanner (24) is disposed in a tilted orientation relative to horizontal corresponding to a downward-looking position of a head of a user when wearing the headwear article (12) having said scanner (24) thereon.

24. The method of any one of claims 12 to 19, further comprising manually actuating a switch to at least one of turn on the device and activate the detection mode, switch the scanner (24) between the detection mode and the reading mode, and turn off the device.

## Patentansprüche

1. Mobile Vorrichtung (10) zum optischen Lesen eines durch eine Maschine interpretierbaren Codes (18) an einem Gegenstand, wobei die Vorrichtung (10) umfasst:
ein am Kopf anbringbares Abtastgerät (12) mit einem Codelesegerät (24), das einen optischen Eingang (34) aufweist, wobei das Codelesegerät (24) an einem Kopfbekleidungsartikel (22) befestigt ist, der zum Tragen auf einem Kopf eines Nutzers ausgelegt ist, wobei das Codelesegerät (24) an dem Kopfbekleidungsartikel (22) an einer nach vorne weisenden Position angeordnet ist, damit der optische Eingang (34) in eine Richtung des Sichtfelds des Nutzers zeigt, wobei ein abtastbares Feld (26) des optischen Eingangs (34) des Codelesegeräts (24) in das Sichtfeld des Nutzers fällt, wenn er den Kopfbekleidungsartikel (22) am Kopf trägt;
eine Verarbeitungseinheit (14), die in elektrischer Kommunikation mit dem am Kopf anbringbaren Abtastgerät (12) steht und mindestens eine Stromquelle (40) und eine elektronische Steuerungseinheit (42) enthält, wobei die elektronische Steuerungseinheit (42) das am Kopf angebrachte Abtastgerät (12) steuert, um das Codelesegerät (24) zumindest zwischen einem Detektionsmodus und einem Lesemodus desselben umzuschalten;
eine Vorrichtung zur drahtlosen Kommunikation in elektrischer Verbindung mit der elektronischen Verarbeitungseinheit (14), wobei die Vorrichtung zur drahtlosen Kommunikation betrieben werden kann, um drahtlos Informationen, die dem abgetasteten, von einer Maschine interpretierbaren Code (18) entsprechen, an eine entfernte Empfangseinheit (20) zum Speichern und/oder zur Datenverarbeitung zu übertragen;
wobei das Codelesegerät (24) in dem Detektionsmodus in einem Modus mit geringer Leistung betrieben werden kann, der ausreicht, um das Vorhandensein des durch eine Maschine interpretierbaren Codes (18) und/oder eines Objekts (16) zu detektieren, das/die für das Vorhandensein des durch eine Maschine interpretierbaren Codes (18) innerhalb des abtastbaren Feldes (26) repräsentativ ist/sind; und
wobei die elektronische Steuerungseinheit (42) nach der Detektion des Vorhandenseins des durch eine Maschine interpretierbaren Codes (18) innerhalb des abtastbaren Felds (26) das Codelesegerät in einen Lesemodus mit höherer Leistung umschaltet, der ausreicht, damit das Codelesegerät (24) den durch eine Maschine interpretierbaren Code (18) optisch lesen kann; **dadurch gekennzeichnet, dass** das Codelesegerät (24) eine Bereichssuchvorrichtung umfasst, wobei die Bereichssuchvorrichtung mindestens eine Wellenquelle und mindestens einen Sensor beinhaltet, wobei der Sensor einen Teil des optischen Eingangs (34) des Codelesegeräts (24) bildet und betrieben werden kann, um eine Rückmeldung von der Wellenquelle zu detektieren, wobei die Wellenquelle beruhend auf dem Steuern des am Kopf angebrachten Abtastgeräts (12) durch die elektronische Steuerungseinheit (42) eine Bereichssuchwelle mit geringer Leistung in dem Detektionsmodus und eine Lesewelle mit höherer Leistung in dem Lesemodus emittiert.

2. Mobile Vorrichtung nach Anspruch 1, wobei das Codelesegerät (24) eine Kamera umfasst, wobei, wenn das Codelesegerät (24) in dem Lesemodus mit höherer Leistung betrieben wird, die Kamera betrieben werden kann, um ein oder mehrere Bilder des detektierten von einer Maschine interpretierbaren Codes aufzunehmen und die Verarbeitungseinheit betrieben werden kann, um den von einer Maschine interpretierbaren Code auf der Grundlage der aufgenommenen Kamerabilder zu lesen.

3. Mobile Vorrichtung nach Anspruch 1 oder 2, wobei das am Kopf anbringbare Abtastgerät (12) eine Beleuchtungsleuchte beinhaltet, die betrieben werden kann, um Beleuchtungslicht mit hoher Leistung in dem Lesemodus zu emittieren.

4. Mobile Vorrichtung nach Anspruch 2, wobei die Verarbeitungseinheit (14) betrieben werden kann, um mindestens eine Distanz zwischen dem optischen Eingang (34) des Codelesegeräts (24) und dem von einer Maschine interpretierbaren Code (18) zu messen, der unter Verwendung der detektierten Rückmeldung von der Wellenquelle während des Detektionsmodus detektiert wird, und die Verarbeitungseinheit (14) betrieben werden kann, um optische Eigenschaften der Bilder, die von der Kamera während des Lesemodus aufgenommen werden, auf der Grundlage der gemessenen Distanz zu optimieren.

5. Mobile Vorrichtung nach Anspruch 2, wobei die Wellenquelle der Bereichssuchvorrichtung einen Laser oder ein Infrarot oder einen Ultraschall oder einen Radar umfasst.

6. Mobile Vorrichtung nach einem der Ansprüche 1 bis 5, wobei die Steuerungseinheit (42) betrieben werden kann, um das Codelesegerät (24) autonom zwischen dem Detektionsmodus und dem Lesemodus umzuschalten, ohne eine Betätigungseingabe von dem Nutzer zu benötigen.

7. Mobile Vorrichtung nach Anspruch 6, wobei die Steuerungseinheit (42) konfiguriert ist, um das Codelesegerät (24) von dem Detektionsmodus in den Lesemodus umzuschalten, wenn mindestens zwei gleichzeitige Bedingungen erfüllt sind: i) das Vorhandensein des von einer Maschine interpretierbaren Codes (18) wird innerhalb des abtastbaren Felds (26) detektiert; und ii) eine Orientierung des Codelesegeräts (24) ist innerhalb eines vorgewählten akzeptablen Bereichs angeordnet.

8. Mobile Vorrichtung nach Anspruch 7, wobei das Codelesegerät (24) relativ zur Horizontalen in einer geneigten Orientierung innerhalb des vorgewählten akzeptablen Bereichs der Orientierung des Codelesegeräts (24) ausgerichtet ist, der einer nach unten schauenden Position des Kopfes des Nutzers entspricht, wenn er den Kopfbekleidungsartikel, der darauf das Codelesegerät aufweist, am Kopf trägt.

9. Mobile Vorrichtung nach Anspruch 7 oder 8, ferner umfassend einen mikroelektromechanischen Sensor, der in Verbindung mit der Verarbeitungseinheit steht und der betrieben werden kann, um zumindest die Orientierung des Codelesegeräts (24) zu detektieren.

10. Mobile Vorrichtung nach einem der Ansprüche 1 bis 5, wobei die Steuerungseinheit (42) ferner einen manuell betätigten Schalter umfasst, der in Reichweite des Nutzers und in Verbindung mit zumindest der Verarbeitungseinheit (14) angeordnet ist, wobei der manuell betätigte Schalter betrieben werden kann, um die Vorrichtung einzuschalten und den Detektionsmodus zu aktivieren und/oder um das Codelesegerät (24) zwischen dem Detektionsmodus und dem Lesemodus umzuschalten und/oder um die Vorrichtung auszuschalten.

11. Mobile Vorrichtung nach einem der Ansprüche 1 bis 10, wobei das Objekt (16), das das Vorhandensein des von einer Maschine interpretierbaren Codes (18) repräsentiert, einen oder mehrere Zielindikatoren beinhaltet, die an dem Gegenstand angeordnet sind.

12. Verfahren zum Abtasten von durch eine Maschine interpretierbaren Codes (18) an einem Gegenstand (16) unter Verwendung einer drahtlosen mobilen Vorrichtung, wobei das Verfahren umfasst, dass:
ein an einem Kopfbekleidungsartikel (12) angebrachtes Abtastgerät (24) in einem Detektionsmodus mit geringer Leistung betrieben wird und das Abtastgerät (24) verwendet wird, um das Vorhandensein eines oder mehrerer der von einer Maschine interpretierbaren Codes (18) und ein Objekt (16), das für das Vorhandensein des von einer Maschine interpretierbaren Codes (18) innerhalb des abtastbaren Felds (26) repräsentativ ist, zu detektieren;
in Ansprechen auf das Detektieren des Vorhandenseins eines oder mehrerer der Objekte (16) innerhalb des abtastbaren Felds (26) das Abtastgerät (24) in einen Lesemodus mit höherer Leistung umgeschaltet wird und ein oder mehrere von einer Maschine interpretierbare Codes (18) unter Verwendung des Abtastgeräts (24), das in dem Modus mit höherer Leistung betrieben wird, gelesen wird/werden; und
Informationen, die die von einer Maschine interpretierbaren Codes (18) betreffen, die von dem Abtastgerät gelesen werden, drahtlos an eine Verarbeitungseinheit an einem entfernten Ort zur Speicherung und/oder Datenverarbeitung übertragen werden, **dadurch gekennzeichnet, dass**
das Abtastgerät (24) eine Bereichssuchvorrichtung umfasst, wobei der Schritt des Betreibens des Abtastgeräts (24) in dem Modus mit geringer Leistung ferner umfasst, dass eine Wellenquelle der Bereichssuchvorrichtung verwendet wird, um eine Bereichssuchwelle mit geringer Leistung zu emittieren, um auf das eine oder mehrere Objekte (16) abzuzielen, und der Schritt des Lesens eines oder mehrerer von einer Maschine interpretierbaren Codes (18) unter Verwendung des Abtastgeräts (24), das in dem Modus mit höherer Leistung betrieben wird, umfasst, dass die Wellenquelle der Bereichssuchvorrichtung verwendet wird, um eine Lesewelle mit höherer Leistung zu emittieren.

13. Verfahren nach Anspruch 12, das ferner umfasst, dass für den Nutzer aufgezeigt wird, dass die von einer Maschine interpretierbaren Codes (18) von dem Abtastgerät (24) gelesen worden sind.

14. Verfahren nach Anspruch 12, das ferner umfasst, dass Informationen gespeichert werden, die für die gelesenen, von einer Maschine interpretierbaren Codes (18) eindeutig sind.

15. Verfahren nach Anspruch 12, das ferner umfasst, dass die von einer Maschine interpretierbaren Codes (18) in einem Kommissioniersystem für Verbrauchsgüter und/oder verbrauchbare Güter abgetastet werden.

16. Verfahren nach einem der Ansprüche 12 bis 15, wobei das Abtastgerät (24) eine Kamera umfasst und der Schritt des Betreibens des Abtastgeräts (24) in dem Modus mit hoher Leistung ferner umfasst, dass die Kamera verwendet wird, um ein oder mehrere Bilder des detektieren, von einer Maschine interpretierbaren Codes (18) aufzunehmen, wobei die Verarbeitungseinheit (14) betrieben werden kann, um die von einer Maschine interpretierbaren Codes auf der Grundlage der aufgenommenen Kamerabilder zu lesen.

17. Verfahren nach Anspruch 16, das ferner umfasst, dass mindestens eine Distanz zwischen dem Abtastgerät (24) und den von einer Maschine interpretierbaren Codes (18) unter Verwendung einer detektieren Rückmeldung von der Bereichssuchwelle mit geringer Leistung, die während des Detektionsmodus mit geringer Leistung aktiv ist, gemessen wird.

18. Verfahren nach Anspruch 17, das ferner umfasst, dass optische Eigenschaften der von einer Maschine interpretierbaren Codes (18), die unter Verwendung des Abtastgeräts (24) gelesen werden, auf der Grundlage der Distanz optimiert werden, die durch die Bereichssuchwelle mit geringer Leistung gemessen wird.

19. Verfahren nach Anspruch 15, das ferner umfasst, dass ein Beleuchtungslicht mit hoher Leistung in dem Lesemodus emittiert wird, um die Qualität der von der Kamera aufgenommenen Bilder zu verbessern.

20. Verfahren nach einem der Ansprüche 1 bis 19, das ferner umfasst, dass das Abtastgerät (24) zwischen dem Detektionsmodus und dem Lesemodus autonom umgeschaltet wird, ohne dass eine Betätigungseingabe von einem Nutzer des Geräts benötigt wird.

21. Verfahren nach Anspruch 20, das ferner umfasst, dass das Abtastgerät (24) aus dem Detektionsmodus in den Lesemodus nur umgeschaltet wird, wenn mindestens zwei gleichzeitige Bedingungen erfüllt sind: i) das Vorhandensein des von einer Maschine interpretierbaren Codes (18) wird in dem abtastbaren Feld detektiert; und ii) eine Orientierung des Abtastgeräts (24) ist innerhalb eines vorgewählten akzeptablen Bereichs angeordnet.

22. Verfahren nach Anspruch 21, das ferner umfasst, dass ein mikroelektromechanischer Sensor verwendet wird, um die Orientierung des Abtastgeräts (24) zu messen.

23. Verfahren nach Anspruch 21, das ferner umfasst, dass detektiert wird, wenn das Abtastgerät (24) innerhalb des vorgewählten Bereichs orientiert ist, indem bestimmt wird, dass das Abtastgerät (24) in einer geneigten Orientierung relativ zur Horizontalen angeordnet ist, die einer nach unten schauenden Position eines Kopfs eines Nutzers entspricht, wenn dieser den Kopfbekleidungsartikel (12), der darauf das Abtastgerät (24) aufweist, am Kopf trägt.

24. Verfahren nach einem der Ansprüche 12 bis 19, das ferner umfasst, dass ein Schalter manuell betätigt wird, um die Vorrichtung einzuschalten und den Detektionsmodus zu aktivieren und /oder um das Abtastgerät (24) zwischen dem Detektionsmodus und dem Lesemodus umzuschalten und/oder um die Vorrichtung auszuschalten.

## Revendications

1. Dispositif mobile (10) pour une lecture optique d'un code interprétable par machine (18) sur un objet, le dispositif (10) comprenant :
un scanneur pouvant être monté sur la tête (12) et incluant un lecteur de code (24) présentant une entrée optique (34), le lecteur de code (24) étant fixé à un article de type couvre-chef (22) apte à être porté sur la tête d'un utilisateur, le lecteur de code (24) étant disposé sur l'article de type couvre-chef (22) en position tournée vers l'avant sur celui-ci pour orienter l'entrée optique (34) dans une direction du champ de vision de l'utilisateur, un champ balayable (26) de l'entrée optique (34) du lecteur de code (24) tombant dans le champ de vision de l'utilisateur lorsqu'il porte l'article de type couvre-chef (22) ;
une unité de traitement (14) en communication électrique avec le scanneur pouvant être monté sur la tête (12) et incluant au moins une source d'alimentation (40) et une unité de commande électronique (42), l'unité de commande électronique (42) commandant le scanneur pouvant être monté sur la tête (12) pour au moins commuter le lecteur de code (24) entre un mode de détection et un mode de lecture de celui-ci ;
un dispositif de communication sans fil en communication électrique avec l'unité de traitement électronique (14), le dispositif de communication sans fil étant exploitable de manière à transmettre, par voie hertzienne, des informations correspondant au code interprétable par machine balayé (18), à une unité de réception distante (20), en vue d'un stockage et/ou d'un traitement de données ;
dans lequel, dans le mode de détection, le lecteur de code (24) est exploitable dans un mode à faible puissance suffisant pour détecter la présence d'au moins l'un parmi le code interprétable par machine (18) et un objet (16) représentatif de la présence du code interprétable par machine (18) dans le champ balayable (26) ; et
suite à la détection de la présence du code interprétable par machine (18) dans le champ balayable (26), l'unité de commande électronique (42) commute le lecteur de code dans un mode de lecture à puissance plus élevée suffisant pour que le lecteur de code (24) lise optiquement le code interprétable par machine (18) ; **caractérisé en ce que** le lecteur de code (24) comprend un dispositif de télémétrie, le dispositif de télémétrie incluant au moins une source d'onde et au moins un capteur, le capteur faisant partie de l'entrée optique (34) du lecteur de code (24) et étant exploitable de manière à détecter une rétroaction en provenance de la source d'onde, la source d'onde émettant une onde de télémétrie à faible puissance dans le mode de détection et une onde de lecture à puissance plus élevée dans le mode de lecture, sur la base de la commande du scanneur pouvant être monté sur la tête (12) par l'unité de commande électronique (42).

2. Dispositif mobile selon la revendication 1, dans lequel le lecteur de code (24) comprend une caméra, dans lequel, lorsque le lecteur de code (24) fonctionne dans le mode de lecture à puissance plus élevée, la caméra est exploitable de manière à capturer une ou plusieurs images du code interprétable par machine détecté, et l'unité de traitement est exploitable de manière à lire le code interprétable par machine sur la base desdites images de caméra capturées.

3. Dispositif mobile selon la revendication 1 ou 2, dans lequel le scanneur pouvant être monté sur la tête (12) inclut une lumière d'éclairage qui est exploitable de manière à émettre une lumière d'éclairage à puissance élevée dans le mode de lecture.

4. Dispositif mobile selon la revendication 2, dans lequel l'unité de traitement (14) est exploitable de manière à mesurer au moins une distance entre l'entrée optique (34) du lecteur de code (24) et le code interprétable par machine (18) détecté en utilisant la rétroaction détectée en provenance de la source d'onde au cours du mode de détection, et l'unité de traitement (14) est exploitable de manière à optimiser les propriétés optiques des images capturées par la caméra au cours de la lecture effectuée sur la base de ladite distance mesurée.

5. Dispositif mobile selon la revendication 2, dans lequel la source d'onde du dispositif de télémétrie comprend l'une parmi une source laser, une source infrarouge, une source ultrasonore et une source radar.

6. Dispositif mobile selon l'une quelconque des revendications 1 à 5, dans lequel l'unité de commande (42) est exploitable de manière à commuter le lecteur de code (24) entre le mode de détection et le mode de lecture de manière autonome, sans nécessiter d'entrée d'actionnement à partir de l'utilisateur.

7. Dispositif mobile selon la revendication 6, dans lequel l'unité de commande (42) est configurée de manière à commuter le lecteur de code (24) du mode de détection au mode de lecture lorsqu'au moins deux conditions simultanées sont satisfaites : i) la présence du code interprétable par machine (18) est détectée dans le champ balayable (26) ; et ii) une orientation du lecteur de code (24) est disposée dans une plage acceptable présélectionnée.

8. Dispositif mobile selon la revendication 7, dans lequel le lecteur de code (24) est orienté selon une orientation inclinée par rapport à l'horizontale dans ladite plage acceptable présélectionnée de ladite orientation du lecteur de code (24) qui correspond à une position plongeante de la tête de l'utilisateur lorsqu'il porte l'article de type couvre-chef sur lequel se situe ledit lecteur de code.

9. Dispositif mobile selon la revendication 7 ou 8, comprenant en outre un micro-capteur électromécanique en communication avec l'unité de traitement et exploitable de manière à détecter au moins ladite orientation du lecteur de code (24).

10. Dispositif mobile selon l'une quelconque des revendications 1 à 5, dans lequel l'unité de commande (42) comprend en outre un commutateur à actionnement manuel disposé à portée de l'utilisateur et en communication avec au moins l'unité de traitement (14), le commutateur à actionnement manuel étant exploitable de manière à mettre en œuvre au moins l'une des opérations parmi la mise sous tension du dispositif et l'activation du mode de détection, la commutation du lecteur de code (24) entre le mode de détection et le mode de lecture, et la mise hors tension du dispositif.

11. Dispositif mobile selon l'une quelconque des revendications 1 à 10, dans lequel l'objet (16) représentatif de la présence du code interprétable par machine (18) inclut un ou plusieurs indicateurs de cible disposés sur l'objet.

12. Procédé de balayage de codes interprétables par machine (18) sur un objet (16) au moyen d'un dispositif mobile sans fil, le procédé comprenant les étapes ci-dessous consistant à :
exploiter, dans un mode de détection à faible puissance, un scanneur (24) monté sur un article de type couvre-chef (12), et utiliser le scanneur (24) en vue de détecter la présence d'un ou plusieurs des éléments parmi les codes interprétables par machine (18) et un objet (16) représentatif de la présence du code interprétable par machine (18) dans le champ balayable (26) ;
en réponse à la détection de la présence d'un ou plusieurs desdits objets (16) dans le champ balayable (26), commuter le scanneur (24) sur un mode de lecture à puissance plus élevée, et lire un ou plusieurs codes interprétables par machine (18) en utilisant le scanneur (24) fonctionnant dans le mode à puissance plus élevée ; et
transmettre, par voie hertzienne, des informations connexes aux codes interprétables par machine (18) lus par le scanneur, à une unité de traitement située dans un emplacement distant, en vue d'un stockage et/ou d'un traitement de données, **caractérisé en ce que** :
le scanneur (24) comprend un dispositif de télémétrie, et l'étape d'exploitation du scanneur (24) dans le mode à faible puissance comprend en outre l'étape consistant à utiliser une source d'onde du dispositif de télémétrie pour émettre une onde de télémétrie à faible puissance afin de cibler lesdits un ou plusieurs objets (16) et l'étape de lecture d'un ou plusieurs codes interprétables par machine (18) en utilisant le scanneur (24) fonctionnant dans le mode à puissance plus élevée comprend l'étape consistant à utiliser la source d'onde du dispositif de télémétrie pour émettre une onde de lecture à puissance plus élevée.

13. Procédé selon la revendication 12, comprenant en outre l'étape consistant à identifier, auprès de l'utilisateur, que lesdits codes interprétables par machine (18) ont été lus par le scanneur (24).

14. Procédé selon la revendication 12, comprenant en outre l'étape consistant à stocker des informations uniques aux codes interprétables par machine (18) lus.

15. Procédé selon la revendication 12, comprenant en outre l'étape consistant à balayer les codes interprétables par machine (18) dans un système de préparation de commandes pour des biens de consommation et/ou des biens consommables.

16. Procédé selon l'une quelconque des revendications 12 à 15, dans lequel le scanneur (24) comprend une caméra, et dans lequel l'étape d'exploitation du scanneur (24) dans le mode à puissance élevée comprend en outre l'étape consistant à : utiliser la caméra pour capturer une ou plusieurs images du code interprétable par machine (18) détecté, dans lequel l'unité de traitement (14) est exploitable de manière à lire les codes interprétables par machine sur la base des images de caméra capturées.

17. Procédé selon la revendication 16, comprenant en outre l'étape consistant à mesurer au moins une distance entre le scanneur (24) et les codes interprétables par machine (18) en utilisant une rétroaction détectée à partir de l'onde de télémétrie à faible puissance active pendant le mode de détection à faible puissance.

18. Procédé selon la revendication 17, comprenant en outre l'étape consistant à optimiser des propriétés optiques des codes interprétables par machine (18) lus en utilisant le scanneur (24), sur la base de la distance mesurée par l'onde de télémétrie à faible puissance.

19. Procédé selon la revendication 15, comprenant en outre l'étape consistant à émettre une lumière d'éclairage à puissance élevée, dans le mode de lecture, en vue d'améliorer la qualité des images capturées par la caméra.

20. Procédé selon l'une quelconque des revendications 1 à 19, comprenant en outre l'étape consistant à commuter le scanneur (24) entre le mode de détection et le mode de lecture, de manière autonome, sans nécessiter d'entrée d'actionnement à partir d'un utilisateur du dispositif.

21. Procédé selon la revendication 20, comprenant en outre l'étape consistant à commuter le scanneur (24), du mode de détection au mode de lecture, uniquement lorsqu'au moins deux conditions simultanées sont satisfaites: i) la présence du code interprétable par machine (18) est détectée dans le champ balayable ; et ii) une orientation du scanneur (24) est disposée dans une plage acceptable présélectionnée.

22. Procédé selon la revendication 21, comprenant en outre l'étape consistant à utiliser un micro-capteur électromécanique en vue de mesurer l'orientation du scanneur (24).

23. Procédé selon la revendication 21, comprenant en outre l'étape consistant à détecter lorsque le scanneur (24) est orienté dans la plage présélectionnée, en déterminant que le scanneur (24) est disposé dans une orientation inclinée par rapport à l'horizontale correspondant à une position plongeante de la tête d'un utilisateur lorsqu'il porte l'article de type couvre-chef (12) sur lequel se situe ledit scanneur (24).

24. Procédé selon l'une quelconque des revendications 12 à 19, comprenant en outre l'étape consistant à actionner manuellement un commutateur pour mettre en œuvre au moins l'une des opérations parmi la mise sous tension du dispositif et l'activation du mode de détection, la commutation du scanneur (24) entre le mode de détection et le mode de lecture, et la mise hors tension du dispositif.
